# EUROPÄISCHE PATENTSCHRIFT

(11) **EP 4 377 217 B1**
(45) Veröffentlichungstag und Bekanntmachung des Hinweises auf die Patenterteilung: **14.05.2025**
(21) Anmeldenummer: 22758441.4
(22) Anmeldetag: 28.07.2022
(51) Int. Cl.: B65D 6/04, B65D 6/16, B65D 83/00

(54) **TRAY, STAPEL VON TRAYS UND VERFAHREN ZUM BELADEN/ENTLADEN VON TRAYS**
TRAY, STACK OF TRAYS AND METHOD FOR LOADING/UNLOADING TRAYS
PLATEAU, PILE DE PLATEAUX ET PROCÉDÉ DE CHARGEMENT/DÉCHARGEMENT DE PLATEAUX

(30) Priorität: 29.07.2021 CH 0701172021
(43) Veröffentlichungstag der Anmeldung: 05.06.2024
(73) Patentinhaber: ALPLA Werke Alwin Lehner GmbH & Co. KG, 6971 Hard (AT)
(72) Erfinder: RIEDMANN, Jürgen, 6973 Höchst (AT)
(74) Vertreter: Bohest AG Branch Ostschweiz
(86) Internationale Anmeldenummer: PCT/EP2022/071148
(87) Internationale Veröffentlichungsnummer: WO 2023/006856

(56) Entgegenhaltungen:
- WO-A1-2012/037959
- DE-A1- 10 230 524
- FR-A1- 2 558 442
- RU-C1- 2 726 568
- US-A- 2 700 485

## Beschreibung

Die vorliegende Erfindung betrifft einen Tray zur Lagerung und/oder zum Transport von Gütern, insbesondere Kunststoffbehältern, einen Stapel mit mehreren Trays, ein Verfahren zum Beladen von Trays mit Gütern sowie ein Verfahren zum Entladen von Gütern aus Trays.

Für die Lagerung und für den Transport werden Güter häufig in Lager- und Transportbehälter, sogenannte Trays, geladen. Das Beladen der Trays erfolgt beispielsweise in halb- oder vollautomatischen Be- und Entladeanlagen, die im Anschluss beispielsweise an eine Produktionsanlage, beispielsweise eine Blasvorrichtung für Kunststoffbehälter, oder vor einer Abfüllstation angeordnet sein können.

Es ist allgemein bekannt, dass der zur Verfügung stehende Lagerplatz ein teures Gut ist und dieser daher bestmöglich ausgenutzt werden soll. Ebenso ist es ein Bedürfnis, die gelagerten Güter sicher zu lagern und beispielsweise gegen ein Umfallen zu schützen oder vor zu grosser Bewegung zu schützen, wenn diese transportiert werden. Sind beispielsweise die Güter relativ lose gepackt, so können diese in hohem Mass bewegt werden und entsprechend aneinander reiben. Dies führt unter Umständen zu Kratzern auf der Oberfläche der Güter.

Wenn die Güter gepackt werden sollen oder zumindest geordnet gepackt werden sollen, so sind gegebenenfalls mehr oder weniger komplizierte Vorrichtungen notwendig um die Güter in entsprechende Trays einzubringen. Eine derartige Vorrichtung ist beispielsweise mit der WO 2017/174420 A1 bekannt geworden. Die in dieser PCT-Anmeldung offenbarte Vorrichtung vereinfacht zwar die bis dato bekannten Methoden und Vorrichtungen zum Beladen von Gütern in Trays und verhindert auch ein Umfallen der einzelnen Güter während des Beladevorgangs, die Vorrichtung weist dennoch relativ viele Einzelteile auf. Eine weitere Vorrichtung zum Be-/Entladen von Trays ist aus der DE 10230524 A1 bekannt. Ein Tray gemäß dem Oberbegriff des unabhängigen Anspruchs 1 ist aus der US 2700485 A bekannt.

Es ist daher eine Aufgabe der Erfindung, zumindest einen oder mehrere Nachteile des Standes der Technik zu beheben. Insbesondere soll ein Tray geschaffen werden, der es ermöglicht, diesen mit einfachen Mitteln zu beladen und insbesondere mit einer hohen Packungsdichte zu beladen. Vorzugsweise soll ein entsprechendes Beladeverfahren und Entladeverfahren bereitgestellt werden.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Eine erfindungsgemässer Tray zur Lagerung und/oder zum Transport von Gütern, insbesondere Kunststoffbehältern, umfasst zwei erste Seitenwände und zwei zweite Seitenwände. Der Tray umfasst zudem vier Eckelemente, wobei die ersten und zweiten Seitenwände mit den Eckelementen über Steckverbindungen verbunden sind. Der Tray weist einen bewegbaren Boden auf.

Ein bewegbarer Boden ermöglicht das Beschicken des Trays mit Gütern in einer höheren Packungsdichte. Der bewegbare Boden kann angehoben werden, sodass dieser in seiner vertikalen Lage relativ zu den Seitenwänden verschoben ist und daher die Zugänglichkeit zum bewegbaren Boden verbessert ist. Vorzugsweise wird der bewegbare Boden mindestens bis an ein oberes Ende der Seitenwände verschoben, insbesondere über ein oberes Ende der Seitenwände hinaus. Güter, die auf dem angehobenen Boden platziert werden, können beispielsweise seitlich mit einer entsprechenden Vorrichtung, wie beispielsweise einer Greifeinheit, gefasst werden, ohne dass es zu einer Interferenz zwischen der Vorrichtung und den Seitenwänden kommt.

Ein Freiraum innerhalb des fertig beladenen Trays zwischen den Seitenwänden und den Gütern für eine entsprechende Greifeinheit ist daher nicht mehr notwendig, weder zum Beladen der Güter noch zum Entladen der Güter. Die Güter können direkt auf dem angehobenen Boden platziert werden oder von diesem entnommen werden. Ein Fallenlassen der zu beladenden Güter aufgrund mangelnden Platzes innerhalb des Trays für die Greifeinheit kann vermieden werden. Die zu beladenden Güter können damit im Wesentlichen stossfrei in den Tray eingebracht werden. Nach dem Platzieren der zu beladenden Güter auf dem angehobenen Boden kann dieser wieder abgesenkt werden. Die auf dem angehobenen Boden platzierten Güter werden entsprechend gemeinsam mit dem Boden abgesenkt und befinden sich nach dem Absenken innerhalb des Trays.

Auch der Entladevorgang wird erleichtert und kann materialschonender durchgeführt werden. Typischerweise müssen Trays, in denen kein zusätzlicher Freiraum für eine Greifeinheit vorhanden ist, geschüttet werden. Die sich im Tray befindlichen Güter erfahren eine Vielzahl an Stössen und können entsprechend zerkratzt werden.

Der bewegbare Boden hingegen ermöglicht es, diesen gemeinsam mit den Gütern anzuheben, sodass diese von aussen zugänglich werden und mit einer entsprechenden Greifeinheit vom angehobenen Boden abgehoben werden können. Die Güter müssen daher nicht mehr geschüttet werden, sondern können gegriffen und deplatziert werden.

Die Greifeinheit kann als ein insbesondere rechteckiger Rahmen ausgebildet sein, wobei dieser bewegbare Seitenwände aufweist, die in Richtung eines Zentrums der Greifeinheit zugestellt werden können.

Durch die bewegbaren, verstellbaren Seitenwände kann ein lichter Querschnitt innerhalb des Rahmens verringert oder vergrössert werden. Dadurch kann der Rahmen mit einem vergleichsweise grossen Freiraum oberhalb der zu beladenden Gütern platziert werden und ohne Interferenz mit den Gütern nach unten in eine Endlage bewegt werden. Im Anschluss können die bewegbaren Seitenwände entsprechend in Richtung der Güter zugestellt werden, sodass diese satt gehalten werden. Es kann vorgesehen sein, dass eine leichte Pressung erzwungen wird.

Der Tray kann zumindest zwei Querträger aufweisen, wobei zwei einander gegenüberliegende Seitenwände mit den mindestens zwei Querträgern verbunden sind.

Die Querträger erhöhen die Stabilität der Seitenwände. Die ersten Seitenwände und die zweiten Seitenwände bilden gemeinsam mit den vier Eckeelementen einen Rahmen in welchem der bewegbare Boden angeordnet ist. Durch die Verbindung von zwei gegenüberliegenden Seitenwänden mit den mindestens zwei Querträgern kann dieser Rahmen stabilisiert werden.

Vorzugsweise liegt der bewegbare Boden auf den Querträgern auf. Der bewegbare Boden wird somit durch die Querträger stabilisiert und gehalten. Entsprechend kann auf umfangreiche Einrichtungen zum Erhöhen der Stabilität und/oder Steifigkeit des bewegbaren Bodens selbst verzichtet werden, da dies durch die entsprechenden Querträger übernommen werden kann.

Dennoch ist es möglich und vorstellbar, dass der bewegbare Boden an seiner Peripherie Vorsprünge zur Erhöhung der Stabilität aufweist.

Diese Vorsprünge können durch Abkantungen oder Falze geschaffen werden. Dabei sind auch mehrfache Abkantungen möglich.

Der bewegbare Boden kann dabei aus einem metallischen Werkstoff gebildet sein, wie beispielsweise Stahl oder Aluminium und/oder Legierungen davon. Dabei kann der bewegbare Boden als Blech ausgebildet sein, wobei an dessen Peripherie die Ränder abgekantet werden können.

Der Tray kann derart ausgebildet sein, dass die Vorsprünge des bewegbaren Bodens in entsprechende Ausnehmungen an den zumindest zwei Querträgern eingreifen oder in Eingriff bringbar sind, sodass der bewegbare Boden im Tray positionierbar ist.

Der bewegbare Boden kann somit innerhalb des Trays in einer definierten Lage gehalten werden und ein unkontrolliertes Verschieben verhindert werden kann.

Eine derartige Ausbildung erhöht zudem die Stabilität des Trays.

Zur Fixierung der ersten und/oder zweiten Seitenwände sind die Steckverbindungen verformt oder verformbar.

Nach dem Zusammenfügen der Steckverbindungen können diese entsprechend verformt werden, sodass ein unbeabsichtigtes Lösen der Steckverbindungen verhindert wird.

Die Steckverbindungen selbst erlauben ein einfaches und werkzeugloses Verbinden der Seitenwände mit den Eckelementen.

Die Seitenwände können aus einem metallischen Werkstoff gebildet sein, wie beispielsweise Stahl oder Aluminium und/oder Legierungen davon. Vorzugsweise sind die Seitenwände aus einem Blech gefertigt. Dabei kann das Blech, beziehungsweise die Seitenwände, Abkantungen oder Falze zum Erhöhen der Stabilität aufweisen.

An den Querträgern können Aussparungen vorgesehen sein, die beim Stapeln von mehreren Trays in Eingriff mit den ersten Seitenwänden eines unterhalb eines ersten Trays angeordneten zweiten Trays bringbar sind.

Beim Stapeln von Trays können diese somit aneinander positioniert werden und ein stabiler Stapel aus mehreren Trays geschaffen werden.

Die zweiten Seitenwände des Trays können ein Auflageelement und ein Auflager aufweisen, sodass beim Stapeln von mehreren Trays das Auflageelement einer zweiten Seitenwand eines ersten Trays auf dem Auflager einer zweiten Seitenwand eines zweiten Trays anordnenbar ist.

Das sichere und positionsgenaue Stapeln von mehreren Trays übereinander ist dadurch ermöglicht.

Das Auflageelement kann zur Zentrierung konisch zueinander zulaufende Führungsflächen aufweisen.

Dies erleichtert das Einführen oder Einfügen der Trays übereinander und verbessert die Positionierung. Entsprechend kann das Auflager eine oder mehrere im Wesentlichen komplementäre Flächen aufweisen, die in Eingriff oder Wirkverbindung mit den konisch zueinander zulaufenden Führungsflächen bringbar sind.

Es versteht sich, dass auch an den ersten Seitenwänden entsprechenden Auflager und Auflageelemente vorgesehen sein können.

Ein weiterer Aspekt der Erfindung betrifft einen Stapel mit mehreren Trays, insbesondere mit mehreren wie vorliegend beschriebenen Trays. Der Stapel ist auf einem Rahmen angeordnet. Der Rahmen ist in Eingriff mit den Aussparungen der Querträger eines untersten Trays im Eingriff.

Das Bereitstellen eines Stapels auf einem separaten Rahmen ermöglicht das einfache Verschieben, Ausrichten und Bewegen des entsprechenden Stapels.

Zusätzlich oder alternativ kann vorgesehen sein, dass der Rahmen mit Auflageelementen der zweiten Seitenwände eines untersten Trays im Eingriff ist.

Durch den Eingriff des Rahmens in die Aussparungen der Querträger und/oder in die Auflageelemente der zweiten Seitenwände kann eine genaue Positionierung des auf dem Rahmen angeordneten Stapels aus Trays geschaffen werden. Es entsteht eine sichere und zuverlässige Verbindung zwischen dem Rahmen und dem Stapel von Trays.

Der Rahmen kann beispielsweise aus einem metallischen Werkstoff ausgebildet sein, insbesondere Edelstahl. Der Rahmen weist somit eine grosse Festigkeit auf und eine übermässige Abnutzung ist verhindert.

Der Stapel kann einen Deckel aufweisen, wobei der Deckel auf entsprechenden Auflagern der zweiten Seitenwände eines obersten Trays aufliegt.

Der Stapel von Trays ist damit verschlossen und ein Eindringen von Schmutz kann verhindert werden.

Es versteht sich, dass der Deckel auch auf einzelne Trays aufgebracht werden kann und nicht zwingend notwendig ein Stapel aus Trays vorhanden sein muss.

Wie zu den zweiten Seitenwänden des Trays beschrieben, können auch die ersten Seitenwände entsprechende Auflageelemente und Auflager aufweisen.

Je nach Anordnung der Querträger sind deren Aussparungen nicht mit den ersten Seitenwänden eines Trays in Verbindung bringbar, sondern entsprechend mit zweiten Seitenwänden.

Ein weiterer Aspekt der Erfindung betrifft ein Verfahren zum Beladen von Trays wie vorliegend beschrieben mit Gütern . Bei den Gütern handelt es sich vorzugsweise um Kunststoffbehälter. Das Verfahren umfasst die Schritte
- Bereitstellen eines Stapels aus Trays, insbesondere eines Stapels wie vorliegend beschrieben,
- Entnehmen eines ersten Trays aus dem Stapel,
- Bereitstellen dieses Trays in einer Beladeposition,
- Anheben des bewegbaren Bodens des Trays bis zu einer Beladungsebene,
- Platzieren der zu beladenden Güter auf dem angehobenen Boden,
- Absenken des angehobenen Bodens in seine Ursprungslage.

Wie bereits erläutert ermöglicht dieses Verfahren das Beladen eines Trays mit Gütern, ohne dass diese unnötig aus grosser Höhe fallen gelassen werden müssen. Zudem kann durch dieses Verfahren ein Tray dichter gepackt werden, da innerhalb des Trays kein zusätzlicher Platz vorgesehen werden muss, um beispielsweise mit einer Greifeinheit in den Tray zu greifen.

Vorzugsweise wird der bewegbare Boden in vertikaler Richtung bis oberhalb der Seitenwände des Trays angehoben.

Der bewegbare Boden ist damit nach dem Anheben oberhalb der Seitenwände angeordnet und vollständig seitlich zugänglich. Die zu beladenden Güter können damit im Wesentlichen direkt seitlich auf den angehobenen Boden geschoben werden und müssen nicht zwingend angehoben werden, um auf dem bewegbaren Boden des Trays angeordnet zu werden.

Die zu beladenden Güter werden vorzugsweise mit einer Greifeinheit auf dem bewegbaren Boden des Trays platziert. Dies erlaubt ein präzises und genaues Beschicken des Trays mit den zu beladenden Gütern.

Dabei kann vorgesehen sein, dass die Greifeinheit eine vollständige Beladung des Trays in einem einzigen Schritt vornimmt, mit anderen Worten sämtliche zu beladende Güter gleichzeitig und in einem Schritt auf dem bewegbaren Boden des Trays platziert.

Dabei kann vorgesehen sein, dass die Greifeinheit im Wesentlichen als ein rechteckiger Rahmen ausgebildet ist, der ein Packfeld aus zu beladenden Gütern umschliesst und dieses Packfeld auf den angehobenen, bewegbaren Boden schiebt. Dabei kann das Packfeld durch bewegbare Seitenwände des Rahmens ohne Klemmung satt gehalten werden. Alternativ ist es auch möglich, dass durch die bewegbaren Seitenwände eine leichte Pressung auf die zu beladenden Gütern ausgeübt wird.

Vorzugsweise wird nach dem Platzieren der zu beladenden Güter die Greifeinheit geöffnet oder zumindest soweit entlastet, sodass die zu beladenden Güter nicht mehr geklemmt sind. Die Greifeinheit bleibt zumindest während eines Teils des Absenkvorgangs des bewegbaren Bodens in dieser Lage.

Durch das Verharren der Greifeinheit in dieser Lage ist während des Absenkvorgangs eine seitliche Führung bereitgestellt, sodass die auf dem bewegbaren Boden platzierten Güter nicht umfallen können.

Nach dem Beladevorgang kann der Tray einem zweiten Stapel aus beladenen Trays zugeführt werden.

Vorzugsweise werden vor dem Platzieren der zu beladenden Güter auf dem angehobenen Boden die zu beladenden Güter in einer Sammelposition bereitgestellt, insbesondere als ein Packfeld.

Ein Packfeld entspricht einer entsprechenden Anzahl von zu beladenden Gütern, welche einer maximalen Anzahl von Gütern entspricht, die in einem einzelnen Tray platziert werden können. Ein Packfeld ist entsprechend auch gemäss der Grösse des Trays ausgebildet, entspricht also in Länge und Breite den entsprechenden Massen des zu beladenden Trays.

Dies erlaubt das Bereitstellen einer vollständigen Lage an Gütern die in den Tray, respektive auf den angehobenen Boden, platziert werden.

Vorzugsweise wird eine Mehrzahl an Gütern mittels einer Umsetzeinrichtung, insbesondere eines Greifers oder eines Schiebers, von einer Zufuhreinrichtung in die Sammelposition umgesetzt.

Durch das entsprechende Umsetzen kann eine vollständige Lage an Gütern bereitgestellt werden, sodass diese von einer entsprechenden Greifeinheit umgesetzt und auf dem angehobenen Boden platziert werden kann.

Die Mehrzahl an Gütern kann in zumindest einer Zeile und vorzugsweise in mehreren Zeilen angeordnet sein.

Eine Anordnung der Güter in einer oder mehreren Zeilen, beziehungsweise das Bereitstellen von den Gütern in einer oder mehreren Zeilen, ermöglicht das einfache Umsetzen der entsprechenden Güter beispielsweise auf ein Taktband mit einem Auflaufzentrierrahmen. Durch das Taktband können die einzelnen, beziehungsweise die mehreren, Zeilen gemeinsam in eine spezifische Richtung verschoben werden und in Anlage mit einem Auflaufzentrierrahmen gebracht werden, beziehungsweise in Anlage zu bereits positionierten Gütern.

Sobald an diesem Auflaufzentrierrahmen eine genügende Anzahl an zu beladenden Gütern angeordnet ist, können diese automatisch vermessen werden. Durch dieses Messen kann festgestellt werden, ob das so erzielte Packfeld die gewünschten Aussenabmessungen aufweist. Ist dies der Fall, kann der Auflaufzentrierrahmen entfernt werden und das gesamte Packfeld in die Sammelposition verschoben werden.

Die Umsetzeinrichtung kann als ein Greifer, insbesondere als ein Multigreifer ausgebildet sein, wie er beispielsweise in der WO 2017/174420 A1 beschrieben ist. Ein Multigreifer ist ein Greifer, der gleichzeitig mehrere Behälter greifen kann.

Alternativ kann die Umsetzeinrichtung auch lediglich als ein Schieber ausgebildet sein, der es ermöglicht, die zu beladenden Güter seitlich auf ein Taktband zu schieben.

Ein weiterer Aspekt der Erfindung betrifft ein Verfahren zum Entladen von Gütern aus Trays wie vorliegend beschrieben. Bei den Gütern handelt es sich vorzugsweise um Kunststoffbehälter. Das Verfahren umfasst die folgenden Schritte:
- Bereitstellen eines Stapels aus beladenden Trays, insbesondere eines Stapels wie vorliegend beschrieben,
- Entnehmen eines ersten Trays aus dem Stapel,
- Bereitstellen dieses Trays in einer Entladeposition,
- Anheben des bewegbaren Bodens des Trays bis zu einer Entladungsebene, sodass die auf dem Boden platzierten zu entladenden Güter angehoben werden,
- Entnehmen der zu entladenden Güter von dem angehobenen Boden,
- Absenken des angehobenen Bodens in seine Ursprungslage.

Das Anheben des bewegbaren Bodens zur Entnahme der Güter ermöglicht es, diese gegenüber den Seitenwänden des Trays anzuheben, sodass diese über den Rand des Trays hervorstehen. Dadurch sind die Güter seitlich zugänglich und können mit entsprechenden Vorrichtungen entnommen werden, ohne dass innerhalb des Trays ein zusätzlicher Platz bereitgestellt werden muss.

Die Güter können beispielsweise mit einer Greifeinheit entnommen werden. Die Greifeinheit kann wie vorliegend beschrieben ausgebildet sein, beispielsweise als im Wesentlichen rechteckiger Rahmen.

Vorzugsweise wird der bewegbare Boden in vertikaler Richtung bis oberhalb der Seitenwände des Trays angehoben.

Durch ein Anheben des Bodens bis oberhalb der Seitenwände sind die auf dem Boden angeordneten oder platzierten Güter seitlich vollständig zugänglich. Zur Entnahme aus dem Tray, und in diesem Fall zur Entnahme vom Boden des Trays, können die Güter einfach seitlich verschoben werden. Ein vertikales Anheben kann entfallen.

Vorzugsweise werden die zu entladenden Güter mit einer Greifeinheit von dem bewegbaren Boden entnommen und in einer Bereitschaftsposition bereitgestellt.

In dieser Bereitschaftsposition können die entladenen Güter vereinzelt werden oder beispielsweise in Gruppen, wie beispielsweise in einzelnen Zeilen, weiterverarbeitet oder zur Weiterverarbeitung positioniert werden.

Zur Entnahme der zu entladenden Güter von dem angehobenen Boden wird die Greifeinheit geschlossen, sodass die zu entladenden Güter in der Greifeinheit geklemmt oder satt gehalten sind. Zumindest während eines Teils des Absenkvorgangs des Bodens kann die Greifeinheit in dieser Lage verbleiben.

In der Ausbildung der Greifeinheit als im Wesentlichen rechteckiger Rahmen kann dieser bewegbare Seitenwände aufweisen die es ermöglichen, einen lichten Querschnitt des Rahmens zu vergrössern und zu verkleinern. Dabei können die zu entladenden Güter durch die bewegbaren Seitenwände des Rahmens ohne Klemmung satt gehalten werden. Alternativ ist es auch möglich, dass durch die bewegbaren Seitenwände eine leichte Pressung auf die zu entladenen Gütern ausgeübt wird.

Es ist ebenso vorstellbar, dass vor dem Anheben des Bodens die Greifeinheit in eine entsprechende Entnahmeposition fährt und im offenen Zustand verharrt, sodass während dem Anheben des Bodens die Greifeinheit eine seitliche Führung bildet für die mit dem Boden angehobenen Güter.

Entsprechend sind diese während des Anhebevorgangs gegenüber einem Umfallen geschützt.

Nach dem Entladevorgang kann der Tray einem zweiten Stapel aus entladenen Trays zugeführt werden. Entsprechend einfach lassen sich mehrere Trays zu einem Stapel von Trays aufstapeln, sodass diese gemeinsam wieder einer Beladevorrichtung zugeführt werden können.

Im Anschluss an den Entladevorgang kann eine Mehrzahl an Gütern mittels einer Umsetzvorrichtung, insbesondere eines Greifers oder eines Schiebers, von der Bereitschaftsposition auf ein Förderband umgesetzt werden.

Über ein Förderband können die Güter entsprechend einer weiteren Bearbeitungsvorrichtung, wie beispielsweise einer Abfüllanlage, zugeführt werden.

Die Mehrzahl an Gütern kann in zumindest einer Zeile und vorzugsweise in mehreren Zeilen angeordnet sein.

Dies erlaubt ein zeilenweise Abarbeiten der Güter aus der Bereitschaftsposition.

Anhand von Figuren, welche lediglich schematische Darstellungen sind, werden nachfolgend Ausführungsformen der vorliegenden Erfindung im Detail erläutert. Es zeigt:
- Figur 1:: einen Stapel aus Trays;
- Figur 2:: einen einzelnen Tray;
- Figur 3:: eine Schnittansicht durch den untersten Tray aus der Figur 1;
- Figur 4:: eine Detailansicht eines Querträgers;
- Figur 5:: eine Schnittansicht durch einen einzelnen Tray gemäss der Figur 2;
- Figur 6:: eine weitere Schnittansicht durch den untersten Tray des Stapels gemäss der Figur 1;
- Figur 7:: eine Schnittansicht durch den Stapel gemäss der Figur 1;
- Figur 8:: eine perspektivische Ansicht einer Beladestation;
- Figur 9:: eine Draufsicht auf die Beladestation gemäss der Figur 8;
- Figur 10:: eine perspektivische Detailansicht der Beladestation gemäss der Figur 8;
- Figur 11:: eine Seitenansicht der Beladestation gemäss der Figur 8;
- Figur 12:: eine Seitenansicht einer alternativen Beladestation.

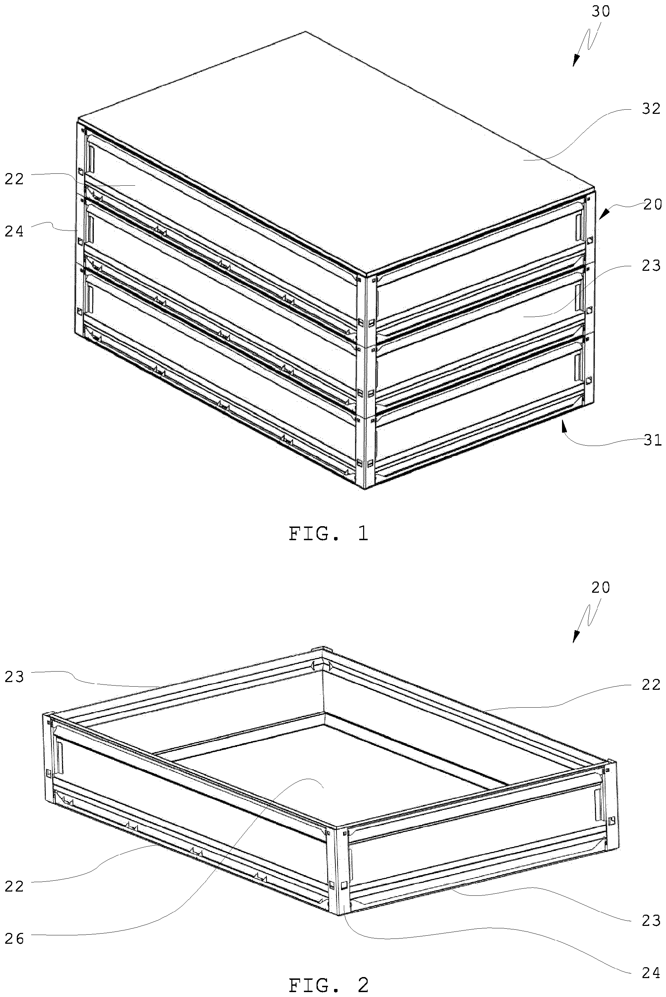

Figur 1 zeigt einen Stapel 30 aus Trays 20. Der Stapel 30 aus Trays 20 weist einen Deckel 32 auf, mit dem der oberste der vorliegend drei Trays 20 verschlossen ist. Der unterste dieser drei Trays 20 steht auf einem Rahmen 31. Die Trays 20 weisen erste Seitenwände 22 und zweite Seitenwände 23 auf. Die Seitenwände 22 und 23 sind über Eckelemente 24 miteinander verbunden. Der besseren Übersichtlichkeit halber sind jeweils nicht sämtliche gleichen Teile mit Bezugszeichen versehen.

Die Figur 2 zeigt einen einzelnen Tray 20 in einer perspektivischen Ansicht. Der Tray 20 weist zwei erste Seitenwände 22 und zwei zweite Seitenwände 23 auf. Die ersten Seitenwände 22 sind einander gegenüberliegend angeordnet. Auch die zweiten Seitenwände 23 sind einander gegenüberliegend angeordnet. Jeweils eine erste Seitenwand 22 ist über ein Eckelement 24 mit einer zweiten Seitenwand 23 verbunden. Die vier Seitenwände 22 und 23 bilden gemeinsam mit den vier Eckelementen 24 einen Rahmen. Innerhalb dieses Rahmens ist ein bewegbarer Boden 26 angeordnet.

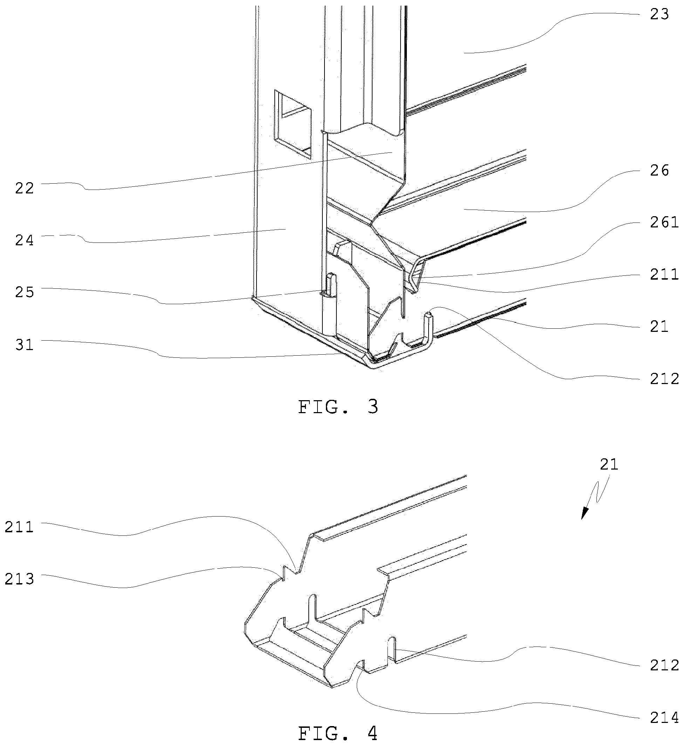

Die Figur 3 zeigt eine Schnittansicht durch den untersten Tray 20 aus der Figur 1. Die Schnittansicht erstreckt sich im Wesentlichen parallel zur zweiten Seitenwand 23. In dieser Schnittdarstellung ist der Querträger 21 ersichtlich, der sich unterhalb des bewegbaren Bodens 26 befindet. Der Boden 26 liegt auf dem Querträger 21 auf. Ebenso ersichtlich ist ein Rahmen 31 auf dem der Tray 20 angeordnet ist.

Der Boden 26 ist vorliegend aus einem Blech ausgebildet und weist an seiner Peripherie Vorsprünge 261 auf. Diese dienen einerseits der Erhöhung der Stabilität und andererseits der Positionierung des Bodens 26 innerhalb des Trays 20.

Die Vorsprünge 261 sind vorliegend durch mehrfaches Abkanten des Blechs ausgebildet.

Die Vorsprünge 261 greifen in entsprechende Ausnehmungen 211 an dem Querträger 21 ein.

Es versteht sich von selbst, dass die vorliegend erläuterte Ausbildung des Bodens 26, insbesondere seine Vorsprünge, entlang der ganzen Peripherie des Bodens 26 umlaufen können.

Der Querträger 21 ist mit seinem Ende in entsprechende Aussparungen der Seitenwand 22 eingeschnappt.

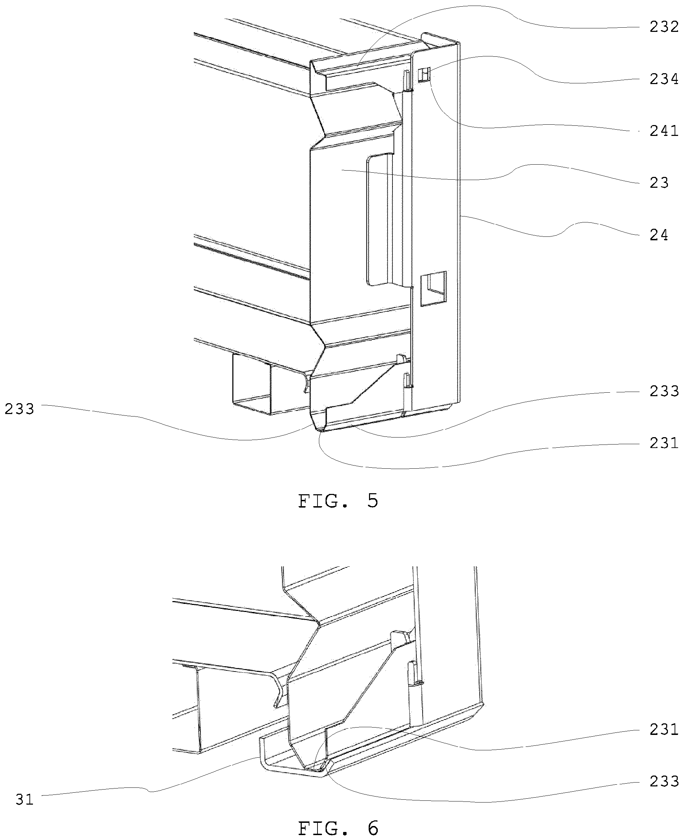

Die Seitenwand 22 ist mit der Seitenwand 23 über das Eckelement 24 verbunden. Am Eckelement 24 sind Steckverbindungen 25 angeordnet die in entsprechende Öffnungen an den Seitenwänden 22 und 23 eingreifen. Diese Steckverbindungen 25 können bei Bedarf verformt werden, sodass diese Verbindung zwischen den Seitenwänden 22 respektive 23 und dem Eckelement 24 nicht mehr gelöst werden kann. Zusätzlich kann im Eckelement 24 eine Öffnung vorgesehen sein, in die ein entsprechendes Gegenstück der Seitenwände 22 oder 23 hinein gebogen werden kann. Eine beispielhafte Anordnung ist in der Figur 5 gezeigt. In dieser ist ein Gegenstück 234, das als verformbare Zunge ausgebildet ist, in eine Öffnung 241 gebogen. Ein vertikales Verschieben des Eckelements 24 und der Seitenwand 23 relativ zueinander ist verhindert.

In der Figur 3 ist ebenfalls ersichtlich, dass der Rahmen 31 als abgekantetes Formteil ausgebildet ist und zwei Wangen aufweist. Eine der beiden Wangen greift in eine Aussparung 212 am Querträger 21 ein.

Die Figur 4 zeigt eine Detailansicht eines Querträgers 21 und vorliegend ein erstes Ende des Querträgers 31. Der Querträger 21 ist vorliegend als abgekantetes Formteil aus einem Blech ausgebildet. Ersichtlich ist hier die Aussparung 212 sowie die Ausnehmungen 211 für die Aufnahme der Vorsprünge 261 des Bodens 26 (siehe dazu Figur 3). Die Ausnehmungen 213 und 214 sind zum Eingriff in entsprechende Ausnehmungen oder Gegenflächen an der Seitenwand 22 vorgesehen um den Querträger 21 in die Seitenwand 22 einzuschnappen.

Die Figur 5 zeigt eine Schnittansicht durch einen einzelnen Tray 20 gemäss der Figur 2. In der Figur 5 ist ebenfalls das Eckelement 24 ersichtlich, mit einer daran angeordneten Öffnung 241 in die ein Gegenstück 234 der Seitenwand 23 hineingebogen ist. Dies verhindert ein vertikales Verschieben der Seitenwand 23 und des Eckelements 24 relativ zueinander.

Der Schnitt der Figur 5 erstreckt sich durch die Seitenwand 23. Die Seitenwand 23 weist an ihrem hier gezeigten unteren Ende, welches auch in gattungsgemässem Gebrauch unten liegt, ein Auflageelement 231 auf. Das Auflageelement 231 erstreckt sich entlang der Seitenwand 23. Beidseits des Auflageelements 231 erstrecken sich jeweils Führungsflächen 233. Die Führungsflächen 232 weisen zur Horizontalen eine Neigung auf, sodass die Führungsflächen 233 aufeinander zu gerichtet sind.

Die Seitenwand 23 weist an ihrem hier gezeigten oberen Ende, welches auch in gattungsgemässen Gebrauch oben liegt, ein Auflager 233 auf. Das Auflager 233 erstreckt sich entlang der Seitenwand 23. Auf einer Seite des Auflagers 232, vorliegend in Richtung des Innern des Trays 20, erstreckt sich eine nicht näher bezeichnete Führungsfläche. Diese Führungsfläche weist zur Horizontalen eine nach aussen gerichtete Neigung auf.

Die Figur 6 zeigt eine weitere Schnittansicht durch den untersten Tray 20 des Stapels 30 gemäss der Figur 1. Dieser Tray 20 ist auf einem Rahmen 31 angeordnet. Insbesondere steht der Tray 20 mit einem Auflageelement 231 auf dem Rahmen 31. Eine Führungsfläche 233 ist entsprechend in Kontakt mit dem Rahmen 31, und vorliegend mit einer im Wesentlichen korrespondierend angeordneten Fläche am Rahmen 31. Diese korrespondierende Fläche wird durch eine entsprechende Abkantung am Rahmen 31 bereitgestellt. Eine entsprechende Ausbildung findet sich an allen vier Seitenwänden 22, 23 des Trays 20 (siehe dazu die Figur 2). Entsprechend wird der Tray 20 zentriert, wenn er auf einem Rahmen 31 angeordnet wird.

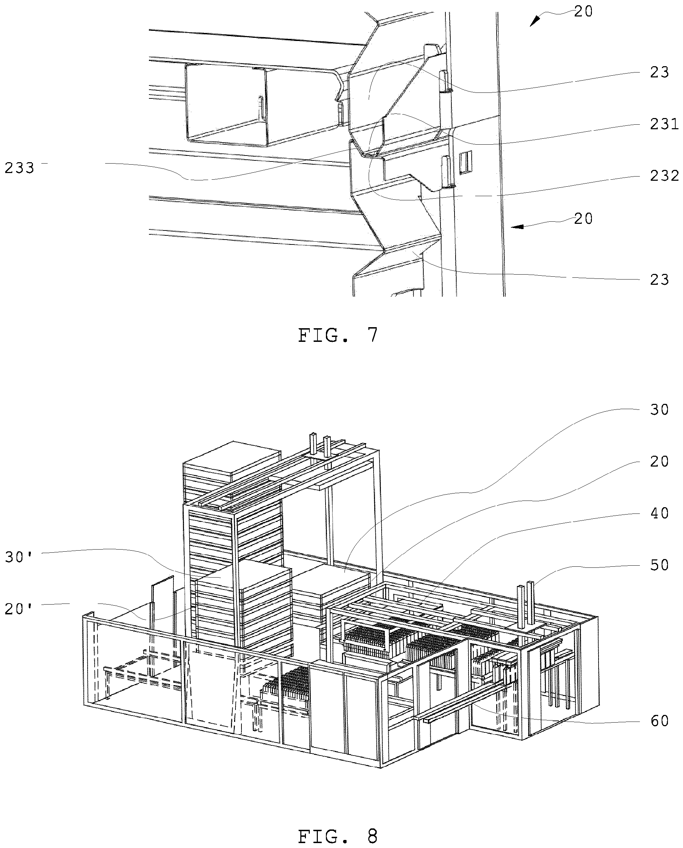

Die Figur 7 zeigt eine Schnittansicht durch den Stapel 30 gemäss der Figur 1. Insbesondere ist die Schnittansicht durch die Schnittstelle zwischen zwei aufeinandergestapelten Trays 20 gezeigt. Ein erster, oberer Tray 20 steht auf einem zweiten, unteren Tray 20. Dabei steht das Auflageelement 231 einer Seitenwand 23 des oberen Trays auf einem entsprechenden Auflager 232 einer Seitenwand 23 des unteren Trays 20. Eine Führungsfläche 233 der Seitenwand 23 ist im Eingriff mit einer entsprechenden, nicht näher bezeichneten, Führungsfläche am Auflager 232 der Seitenwand 23. Eine entsprechende Ausbildung findet sich an allen vier Seitenwänden 22, 23 des Trays 20 (siehe dazu die Figur 2). Entsprechend werden die Trays 20 zueinander zentriert, wenn sie zu einem Stapel 30 gestapelt werden.

Die Figur 8 zeigt eine perspektivische Ansicht einer Beladestation zum Beladen von Trays 20 mit Gütern. In der Beladestation ist ein Stapel 30 aus Trays 20 ersichtlich sowie ein Stapel 30' aus beladenen Trays 20'. Im Beladungsstrom stromaufwärts vom Stapel 30 ist eine Greifeinheit 40 ersichtlich sowie eine Umsetzeinrichtung 50, die vorliegend als ein Greifer ausgebildet ist. In die Beladestation hinein führend ist die Zufuhreinrichtung 60 gezeigt.

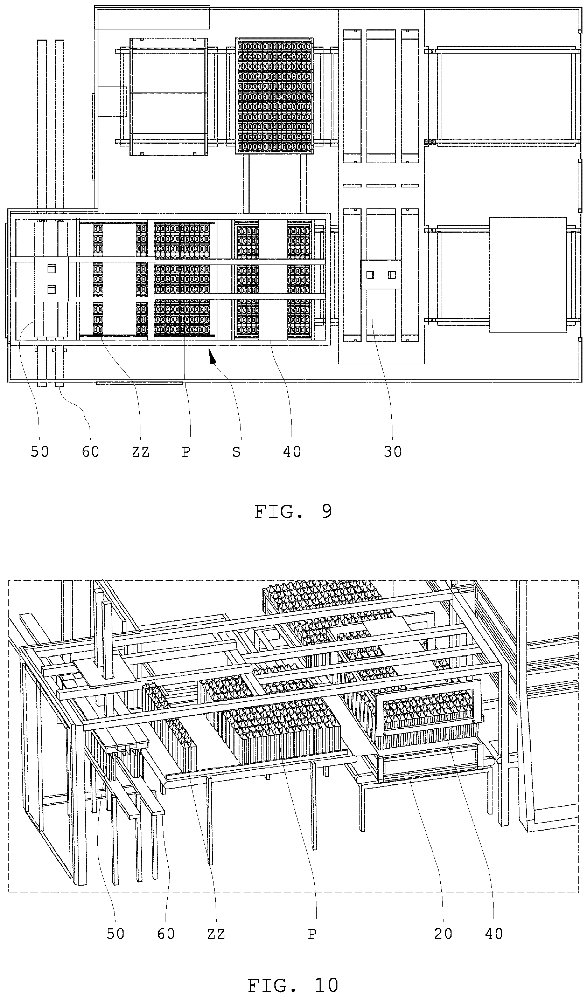

Die Figur 9 zeigt eine Draufsicht auf die Beladestation gemäss der Figur 8. Die zu beladenden Güter werden über die Zufuhreinrichtung 60 in die Beladestation eingebracht und zwar in den Bereich unterhalb einer Umsetzeinrichtung 50. Die Umsetzeinrichtung 50 greift die zu beladenden Güter zeilenweise und vorliegend als Doppelzeile ZZ und befördert diese auf ein nicht näher bezeichnetes Taktband. Das Taktband transferiert diese Doppelzeile ZZ aus zu beladenden Gütern entlang des Beladungsstroms in Richtung eines Packfelds P welches in der Sammelposition S ist. Mit der Greifeinheit 40 wird nachfolgend das Packfeld P entsprechend auf einen angehobenen Boden eines Trays platziert.

Die Figur 10 zeigt eine perspektivische Detailansicht der Beladestation gemäss der Figur 8. In dieser Darstellung ist gezeigt, dass ein zu beladender Tray 20 in einer in vertikaler Richtung tiefer liegenden Ebene angeordnet ist, als das nicht näher bezeichnete Taktband, auf dem das Packfeld P angeordnet ist.

Der bewegbare Boden des Trays kann bis zu einer Beladungsebene angehoben werden. Vorliegend liegt diese mit dem Taktband in einer Ebene.

Oberhalb des Trays 20 ist die Greifeinheit 40 gezeigt die ein weiteres Packfeld klemmt und auf einen entsprechenden Boden 26 (siehe dazu Figur 2) schiebt.

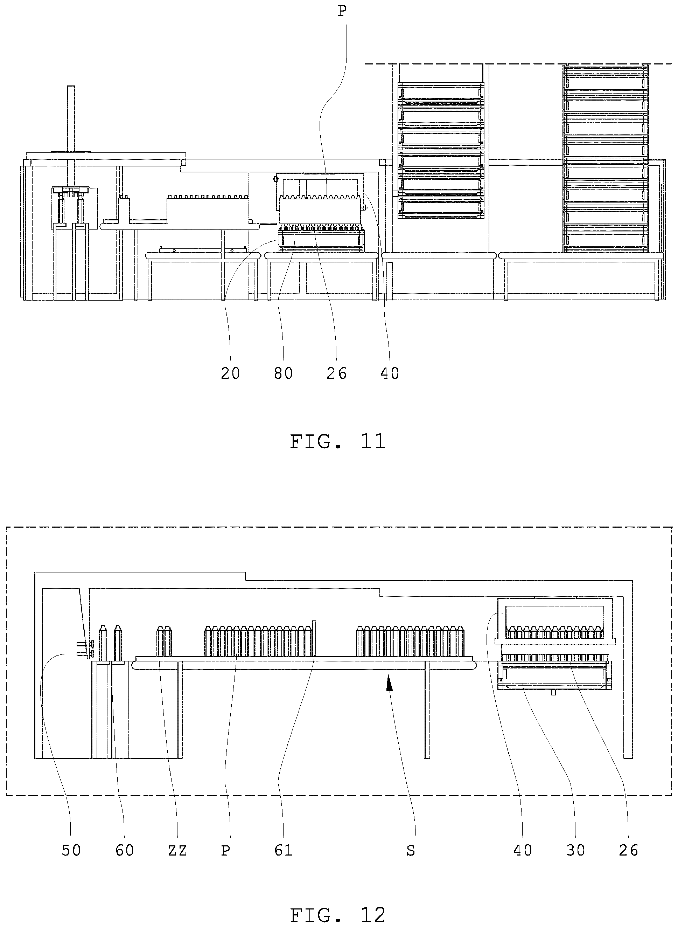

Die Figur 11 zeigt eine Seitenansicht der Beladestation gemäss der Figur 8. In der Figur 11 ist die Hubeinheit 80 ersichtlich, mit der der Boden 26 des Trays 20 angehoben wird. Die Hubeinheit 80 weist mehrere motorbetriebene, hydraulische oder pneumatische Zylinder auf, die den Boden 26 anheben. Der Boden 26 wird solange angehoben, bis dieser im Wesentlichen in der gleichen Ebene steht wie das nicht näher bezeichnete Taktband. Dies ermöglicht es, dass Packfeld P im Wesentlichen durch ein horizontales Verschieben auf dem Boden 26 zu platzieren.

Die Figur 12 zeigt eine Seitenansicht einer alternativen Beladestation. Diese ist derart ausgebildet, dass der Vorgang zum Beladen des Trays in weitere Schritte unterteilt ist.

Die zu beladenden Güter werden über die Zufuhreinrichtung 60 in die Beladestation eingebracht und zwar in den Bereich neben einer Umsetzeinrichtung 50. Die Zufuhreinrichtung 60 ist derart ausgebildet, dass gleichzeitig zwei Zeilen an zu beladenden Gütern in die Beladestation eingebracht werden können. Die Umsetzeinrichtung 50 ist als Schieber ausgebildet, die die zu beladenden Güter seitlich auf ein Taktband schiebt, und zwar in der Form einer Doppelzeile ZZ. Diese Doppelzeile ZZ wird nachfolgend in Richtung eines Auflaufzentrierrahmens 61 bewegt, so lange, bis diese auf dem Auflaufzentrierrahmen 61 auflaufen, beziehungsweise auf einer bereits bestehenden Doppelzeile ZZ aus zu beladenden Gütern. Sobald eine entsprechende Anzahl an zu beladenden Gütern auf dem Auflaufzentrierrahmen 61 aufgelaufen ist, wird das Abmass der zu beladenden Güter gemessen. Entspricht dieses einer Vorgabe, so wird der Auflaufzentrierrahmen 61 entfernt und das Packfeld in Richtung einer Sammelposition S bewegt.

In der Sammelposition S wird das Packfeld P von der Greifeinheit 40 umschlossen und seitlich auf einen angehobenen Boden 26 eines Trays 30 verschoben, sodass das Packfeld P gemeinsam mit der Greifeinheit 40 in der in der Figur 12 gezeigten Lage ist.

In der Figur 12 ist eine Umsetzeinrichtung 50 gezeigt, die als ein Schieber ausgebildet ist. Es versteht sich, dass auch eine wie in den Figur 8 bis 11 gezeigte Umsetzeinrichtung 50, die als Greifer ausgebildet ist, angewendet werden kann. Ebenso ist es möglich, den in der Figur 12 gezeigten Schieber in der Beladestation gemäss den Figuren 8 bis 11 anzuwenden.

## Patentansprüche

1. Tray (20) zur Lagerung und/oder zum Transport von Gütern, insbesondere Kunststoffbehältern (10), umfassend zwei erste Seitenwände (22) und zwei zweite Seitenwände (23) sowie vier Eckelemente (24), wobei die Seitenwände (22, 23) mit den Eckelementen (24) über Steckverbindungen (25) verbunden sind, **dadurch gekennzeichnet, dass** der Tray (20) einen bewegbaren Boden (26) aufweist.

2. Tray (20) nach Anspruch 1, **dadurch gekennzeichnet, dass** der Tray (20) zumindest zwei Querträger (21) aufweist, wobei zwei einander gegenüberliegende Seitenwände (22, 23) mit den mindestens zwei Querträgern (21) verbunden sind

3. Tray (20) nach Anspruch 2, **dadurch gekennzeichnet, dass** der bewegbare Boden (26) auf den Querträgern (21) aufliegt.

4. Tray (20) nach einem der Ansprüche 1 bis 3, **dadurch gekennzeichnet, dass** der bewegbare Boden (26) an seiner Peripherie Vorsprünge (261) zur Erhöhung der Stabilität aufweist.

5. Tray (20) nach Anspruch 4, **dadurch gekennzeichnet, dass** die Vorsprünge (261) in entsprechende Ausnehmungen (211) an den zumindest zwei Querträgern (21) eingreifen oder in Eingriff bringbar sind, sodass der bewegbare Boden (26) im Tray (20) positionierbar ist.

6. Tray (20) nach einem der Ansprüche 1 bis 5, **dadurch gekennzeichnet, dass** zur Fixierung der ersten und/oder zweiten Seitenwände (22, 23) die Steckverbindungen (25) verformbar sind oder verformt sind.

7. Tray (20) nach einem der Ansprüche 1 bis 6, **dadurch gekennzeichnet, dass** an den Querträgern (21) Aussparungen (212) vorgesehen sind, die beim Stapeln von mehreren Trays (20) in Eingriff mit den ersten Seitenwänden (22) eines unterhalb eines ersten Trays (20) angeordneten zweiten Trays (20) bringbar sind.

8. Tray (20) nach einem der Ansprüche 1 bis 7, **dadurch gekennzeichnet, dass** die zweiten Seitenwände (23) des Trays (20) ein Auflageelement (231) und ein Auflager (232) aufweisen, sodass beim Stapeln von mehreren Trays (20) das Auflageelement (231) einer zweiten Seitenwand (23) eines ersten Trays (20) auf dem Auflager (232) einer zweiten Seitenwand (23) eines zweiten Trays (20) anordnenbar ist.

9. Tray (20) nach Anspruch 8, **dadurch gekennzeichnet, dass** das Auflageelement (231) zur Zentrierung konisch zueinander zulaufende Führungsflächen (233) aufweist.

10. Stapel (30) mit mehreren Trays (20) nach einem der Ansprüche 7 bis 9, **dadurch gekennzeichnet, dass** der Stapel (30) auf einem Rahmen (31) angeordnet ist, wobei der Rahmen (31) mit den Aussparungen (212) der Querträger (21) eines untersten Trays (20) in Eingriff ist.

11. Stapel (30) mit mehreren Trays (20) nach einem der Ansprüche 8 bis 9, **dadurch gekennzeichnet, dass** der Stapel (30) auf einem Rahmen (31) angeordnet ist, wobei der Rahmen (31) mit den Auflageelementen (231) der zweiten Seitenwände (23) eines untersten Trays (20) in Eingriff ist.

12. Stapel (30) nach einem der Ansprüche 10 oder 11, **dadurch gekennzeichnet, dass** der Stapel (30) einen Deckel (32) aufweist, wobei der Deckel (32) auf entsprechenden Auflagern (232) der zweiten Seitenwände (23) eines obersten Trays (20) aufliegt.

13. Verfahren zum Beladen von Trays (20) nach einem der Ansprüche 1 bis 9 mit Gütern, umfassend die Schritte
- Bereitstellen eines Stapels (30) aus Trays (20), insbesondere eines Stapels (30) nach einem der Ansprüche 10 bis 12,
- Entnehmen eines ersten Trays (20) aus dem Stapel (30),
- Bereitstellen dieses Trays (20) in einer Beladeposition, **gekennzeichnet durch** die Schritte
- Anheben des bewegbaren Bodens (26) des Trays (20) bis zu einer Beladungsebene,
- Platzieren der zu beladenden Güter auf dem angehobenen Boden (26),
- Absenken des angehobenen Bodens (26) in seine Ursprungslage.

14. Verfahren zum Entladen von Gütern aus Trays (20) nach einem der Ansprüche 1 bis 9, umfassend die Schritte
- Bereitstellen eines Stapels (30') aus beladenen Trays (20'), insbesondere eines Stapels (30') nach einem der Ansprüche 10 bis 12,
- Entnehmen eines ersten Trays (20') aus dem Stapel (30'),
- Bereitstellen dieses Trays (20') in einer Entladeposition,
**gekennzeichnet durch** die Schritte
- Anheben des bewegbaren Bodens (26) des Trays (20') bis zu einer Entladungsebene, sodass die auf dem Boden (26) platzierten zu entladenden Güter angehoben werden,
- Entnehmen der zu entladenden Güter von dem angehobenen Boden (26),
- Absenken des angehobenen Bodens (26) in seine Ursprungslage.

## Claims

1. A tray (20) for storing and/or transporting goods, in particular plastic containers (10), comprising two first side walls (22) and two second side walls (23) and four corner elements (24), wherein the side walls (22, 23) are connected to the corner elements (24) via plug connections (25), **characterized in that** the tray (20) has a movable base (26).

2. The tray (20) according to claim 1, **characterized in that** the tray (20) has at least two crossmembers (21), wherein two opposing side walls (22, 23) are connected to the at least two crossmembers (21).

3. The tray (20) according to claim 2, **characterized in that** the movable base (26) rests on the crossmembers (21).

4. The tray (20) according to one of claims 1 to 3,
**characterized in that** the movable base (26) has projections (261) on its periphery for increasing the stability.

5. The tray (20) according to claim 4, **characterized in that** the projections (261) can engage or be brought into engagement in corresponding recesses (211) in the at least two crossmembers (21) so that the movable base (26) can be positioned in the tray (20).

6. The tray (20) according to any of claims 1 to 5,
**characterized in that** the plug connections (25) are deformable or deformed for fixing the first and/or second side walls (22, 23).

7. The tray (20) according to one of claims 1 to 6,
**characterized in that** recesses (212) are provided in the crossmembers (21) that can brought into engagement with the first side walls (22) of a second tray (20) arranged below a first tray (20) during the stacking of a plurality of trays (20).

8. The tray (20) according to any of claims 1 to 7,
**characterized in that** the second side walls (23) of the tray (20) have a support element (231) and a support (232) so that the support element (231) of a second side wall (23) of a first tray (20) is arrangeable on the support (232) of a second side wall (23) of a second tray (20) during the stacking of a plurality of trays (20).

9. The tray (20) according to claim 8, **characterized in that** the support element (231) has guide surfaces (233) tapering conically to one another for centering.

10. A stack (30) having a plurality of trays (20) according to any of claims 7 to 9, **characterized in that** the stack (30) is arranged on a frame (31), wherein the frame (31) is engaged with the recesses (212) of the crossmembers (21) of a bottommost tray (20).

11. The stack (30) having a plurality of trays (20) according to any of claims 8 to 9, **characterized in that** the stack (30) is arranged on a frame (31),
wherein the frame (31) is engaged with the support elements (231) of the second side walls (23) of a bottommost tray (20).

12. The stack (30) according to any of claims 10 or 11,
**characterized in that** the stack (30) has a cover (32), wherein the cover (32) rests on corresponding supports (232) of the second side walls (23) of an uppermost tray (20).

13. A method for loading trays (20) according to any of claims 1 to 9 with goods, comprising the steps of:
- providing a stack (30) of trays (20), in particular a stack (30) according to any of claims 10 to 12,
- removing a first tray (20) from the stack (30),
- providing this tray (20) in a loading position,
**characterized by** the steps of:
- raising the movable base (26) of the tray (20) up to a loading level,
- placing the goods to be loaded on the raised base (26),
- lowering the raised base (26) into its original position.

14. A method for unloading goods from trays (20) according to any of claims 1 to 9, comprising the steps of:
- providing a stack (30') of loaded trays (20'), in particular a stack (30') according to one of the claims 10 to 12,
- removing a first tray (20') from the stack (30'),
- providing this tray (20') in an unloading position, **characterized by** the steps of
- lifting the movable base (26) of the tray (20') up to an unloading plane so that the goods placed on the base (26) to be unloaded are lifted,
- removing the goods to be unloaded from the raised base (26),
- lowering the raised base (26) into its original position.

## Revendications

1. Bac (20) destiné au stockage et/ou au transport de produits, en particulier de récipients en matière plastique (10), comprenant deux premières parois latérales (22) et deux deuxièmes parois latérales (23) ainsi que quatre éléments d'angle (24), les parois latérales (22, 23) étant reliées aux éléments d'angle (24) par des connecteurs enfichables (25), **caractérisé en ce que** le bac (20) présente un fond mobile (26).

2. Bac (20) selon la revendication 1, **caractérisé en ce que** le bac (20) présente au moins deux traverses (21), où deux parois latérales (22, 23) mutuellement en vis-à-vis sont reliées aux traverses (21), au nombre d'au moins deux.

3. Bac (20) selon la revendication 2, **caractérisé en ce que** le fond mobile (26) repose sur les traverses (21).

4. Bac (20) selon une des revendications 1 à 3, **caractérisé en ce que** le fond mobile (26) présente, sur sa périphérie, des saillies (261) destinées à augmenter la stabilité.

5. Bac (20) selon la revendication 4, **caractérisé en ce que** les saillies (261) s'engagent dans des évidements (211) correspondants sur les traverses (21), au nombre d'au moins deux, ou peuvent être amenées en prise avec ceux-ci, de manière à ce que le fond mobile (26) puisse être positionné dans le bac (20).

6. Bac (20) selon une des revendications 1 à 5, **caractérisé en ce que**, pour la fixation des premières et/ou des deuxièmes parois latérales (22, 23), les connecteurs enfichables (25) sont déformables ou sont déformés.

7. Bac (20) selon une des revendications 1 à 6, **caractérisé en ce qu'**il est prévu sur les traverses (21), des encoches (212) qui, lors de l'empilement de plusieurs bacs (20), peuvent être amenées en prise avec les premières parois latérales (22) d'un deuxième bac (20) disposé sous un premier bac (20).

8. Bac (20) selon une des revendications 1 à 7, **caractérisé en ce que** les deuxièmes parois latérales (23) du bac (20) présentent un élément d'appui (231) et un support (232), de sorte que lors de l'empilement de plusieurs bacs (20), l'élément d'appui (231) d'une deuxième paroi latérale (230) d'un premier bac (20) peut être disposé sur le support (232) d'une deuxième paroi latérale (23) d'un deuxième bac (20).

9. Bac (20) selon la revendication 8, **caractérisé en ce que** l'élément d'appui (231) présente des surfaces de guidage (233) se rapprochant mutuellement de manière conique en vue du centrage.

10. Pile (30) comprenant plusieurs bacs (20) selon une des revendications 7 à 9, **caractérisée en ce que** la pile (30) est disposée sur un cadre (31), ledit cadre (31) étant en prise avec les encoches (212) des traverses (21) d'un bac (20) situé tout en bas.

11. Pile (30) comprenant plusieurs bacs (20) selon une des revendications 8 à 9, **caractérisée en ce que** la pile (30) est disposée sur un cadre (31), ledit cadre (31) étant en prise avec les éléments d'appui (231) des deuxièmes parois latérales (23) d'un bac (20) situé tout en bas.

12. Pile (30) selon une des revendications 10 ou 11, **caractérisée en ce que** la pile (30) présente un couvercle (32), ledit couvercle (32) reposant sur des supports (232) correspondants des deuxièmes parois latérales (23) d'un bac (20) situé tout en haut.

13. Procédé de chargement de bacs (20) selon une des revendications 1 à 9 avec des produits, comprenant les étapes de
- mise à disposition d'une pile de bacs (20), notamment d'une pile (30) selon une des revendications 10 à 12,
- prélèvement d'un premier bac (20) de la pile (30),
- mise à disposition de ce bac (20) dans une position de chargement, **caractérisé en ce qu'**il comprend les étapes de
- levage du fond mobile (26) du bac (20) jusqu'à un niveau de chargement,
- mise en place sur le fond (26) levé des produits devant être chargés,
- descente du fond (26) levé, pour le ramener dans sa position initiale.

14. Procédé de déchargement de produits à partir de bacs (20) selon une des revendications 1 à 9, comprenant les étapes de
- mise à disposition d'une pile (30') de bacs chargés (20'), notamment d'une pile (30') selon une des revendications 10 à 12,
- prélèvement d'un premier bac (20') de la pile (30'),
- mise à disposition de ce bac (20') dans une position de déchargement,
**caractérisé en ce qu'**il comprend les étapes de
- levage du fond mobile (26) du bac (20') jusqu'à un niveau de déchargement, de manière à ce que les produits placés sur le fond (26) et devant être déchargés soit soulevés,
- prélèvement des produits à décharger depuis le fond (26) levé,
- descente du fond (26) levé, pour le ramener dans sa position initiale.
